# EUROPEAN PATENT APPLICATION

(11) **EP 0 682 332 A1**
(43) Date of publication of application: **15.11.1995**
(21) Application number: 95107156.2
(22) Date of filing: 11.05.1995
(51) Int. Cl.: G08G 5/02, G01S 5/14

(54) **System for the precision approach of mobile vehicles to points equipped for such a purpose**

(30) Priority: 11.05.1994 IT MI940932
(71) Applicant: Alcatel Air Navigation Systems S.r.l., I-20059 Vimercate, Milano (IT)
(72) Inventor: Lazzaroni, Elio, I-20158 Milano (IT)
(74) Representative: Pohl, Herbert, Dipl.-Ing.

(57) **Abstract**

The present invention relates to a system for the precision approach of mobile vehicles to provisional points equipped for such a purpose, for instance an aircraft approach and landing system in particular for the approach and landing of helicopters on platforms e.g. offshore ones and to the relative method.

The system comprises a first GPS receiver located in the vicinity of the equipped points, a second GPS receiver installed in said mobile vehicles, a radio link between the first receiver and the second receiver, and a processor that, on the ground of information received from the first receiver and the second receivers, calculates the relative position between the mobile vehicles and the equipped points in such a way as to eliminate the systematic errors introduced in the GPS system.

## Description

The present invention relates to a system for the precision approach of mobile vehicles to provisional points equipped for such a purpose, for instance an aircraft approach and landing system in particular for the approach and landing of helicopters on platforms, e.g. offshore ones, and to the relative method.

Among the various air and sea navigation aid systems, the Global Positioning System (GPS) provides the co-ordinates of the point at which the receiver is located.

GPS makes use of a constellation of satellites orbiting around earth twice a day, which continuously transmit accurate information about their orbit at pre-established instants. The GPS receiver from these received information, computes latitude, longitude and altitude. All the satellites transmit two types of information, one for U.S. military use and one for universal civil use. GPS receivers receive signals from several satellites at a time. The more satellites are received the more accurate the location will be. Through the analysis of the time interval from transmission to reception of signals between satellite and receiver, the latter calculates the distance from each satellite received. For these calculations a precise time basis synchronized with the satellites is used. The co-ordinates of the receiver are then derived from these distances. The position error calculated by a GPS receiver it on the order of some hundred meters. This is due to errors, some of which being not systematic, for instance the noise of the receiver and the receipt of signals from multiple paths followed by them because of obstacles surrounding the receivers, and some being systematic such as, e.g., the different ionospheric and tropospheric propagation, the imprecision of the position of the satellite available to the receiver, imprecision of the satellite time basis and other yet. To these errors it is to be added the voluntary random insertion of systematic errors by the U.S.

Department of Defence (DoD), capable of degrading the accuracy of the system.

In order to reduce the previous systematic errors introduced in the GPS, it is known practice to use the so-called differential system.

In such case a fixed receive GPS station, whose co-ordinates (latitude, longitude and altitude) must be known exactly, located at the place to be approached with precision, is required.

The systematic error introduced into the system can then be calculated on the basis of these co-ordinates and of those obtained from the GPS receiver.

This error is then sent to the aircraft which, in turn, since the GPS systematic errors do not change in a relatively large area, e.g. the one defined about the fixed receive station, carries out the difference between said error and the signal from the on board GPS receiver and therefore it is capable of calculating the absolute latitude, longitude and altitude of its actual position with great accuracy. This solution (differential GPS), on the other hand, requires a fixed station the co-ordinates of which must be known exactly.

While this is possible for fixed airport stations, it creates, on the contrary, several problems to vessels, offshore platforms, emergency landing area, and anyway in all those circumstances in which the landing area is not located at a fixed position but it even varies continuously, since it is necessary to know exactly and continuously calculate the co-ordinates of the base station.

The same problem arises when there is no time for determining, with sufficient accuracy, the co-ordinates of the base station.

It is an object of the present invention to provide a system for the approach and landing of mobile vehicles capable of reducing the systematic errors of the GPS system without the need of knowing exactly the co-ordinates of the area to be approached with precision.

This object is achieved, in accordance with the present invention, through a system for the precision approach of mobile vehicles to provisional prints equipped for such a purpose having the characteristics set forth in claim 1 and a method as set forth in claim 9. Further characteristics of the invention are set forth in the subclaims.

By using the system of the invention, an estimate of the relative position between a mobile vehicle and the point to be approached with precision is obtained thus eliminating the systematic errors introduced in the GPS.

Moreover, it is not necessary to know or continuously calculate the exact location of the area to be approached which can even be variable.

In this manner the driver of the mobile vehicle knows his absolute co-ordinates only approximately, but he knows correctly his relative position with respect to the area to be approached with precision.

Advantageously this relative position so calculated can be displayed without any problem, e.g., in case of an aircraft, through the usual on board ILS (Instrument Landing System) equipment.

Further advantages are obtained in case of radio link between offshore platforms and helicopters by using the NDBs (Non Directional Beacons) already existing on the platforms and therefore without the need of new equipments.

By carrying out several estimates and averaging the estimates thus obtained the non systematic errors such as, e.g., reception of signals from multiple paths, can also be reduced.

The invention will now be illustrated in greater detail.

The operation principle of navigation through relative GPS, i.e. knowing the relative position between the mobile vehicle and the area to be approached with precision, is very simple but nonetheless is very accurate and interesting.

In practice, the incoming mobile vehicle obtains its co-ordinates through the received GPS signal and, along with the latter, it receives, through a radio link, the co-ordinates of the receive station located in the landing area. By comparing these two signals a processor, on board of the aircraft, calculates an approach vector. The operation executed by this processor is simply the difference between the co-ordinates obtained from the two GPS receivers.

One of the main advantages of this system is that the receiver located in the landing area does not require surveillance and preventive calculations of absolute position with consequent cost and time savings. A problem could arise with this system when the two GPS receivers receive different satellites. This because, in order to be able to eliminate the systematic errors introduced into the system, the two receivers must receive the same errors and therefore the same satellites. At any rate, this condition never occurs during the end portion of the travel, since the two receivers, being quite close "see" the same satellites.

Since the relative navigation can make use of the co-ordinates rho (distance) and theta (angle) plus the altitude, the driver is provided with these data in order to be able to fly towards the landing area. In case of an aircraft, he can use, without any problem, simple on board indicators of the type left/right already used for ILS, driven e.g. by the on board processor.

Moreover, the driver, still through the GPS system, can also obtain information about the speed of the aircraft and the time to reach the landing point.

Since the GPS operates at high frequency (L-band, 1575.42 MHz) and thanks also to the type of modulation used, the transmission is not affected neither by reflection interference phenomena, nor by the modulation induced by the rotors of the helicopters.

The relative GPS applied to the approach of helicopters to offshore platforms can make use of already existing NDB equipment as a radio link between the receivers. In this manner it is very cheap and effective. The NDBs are extensively used also for the flight of helicopters from and to offshore platforms. They are used in connection with radio direction finders. Normally they are responsive to variations of propagation typical of low and medium transmission frequencies. Notwithstanding these problems they are extensively used because of their low cost, because they are omnidirectional and because the responsibility for accuracy is mainly due to the on board receiver. The NDBs, in fact, in addition to the normal information transmitted, are capable of transmitting also MSK (Minimum Shift Keying) modulated data such as those relative to the information received by the GPS receiver. Moreover, the driver can identify the received NDB station through the identification signal emitted by the beacon.

The relative navigation is much more accurate than knowing the absolute GPS position of each receiver, since all systematic errors deriving from, e.g. the different tropospheric and ionospheric propagation due to different temperature, pressure and humidity of the air layers, the inaccuracy of the satellite position available at the receiver, the inaccuracy of the satellite clock, are eliminated through simple calculations. In fact, all the correctable errors mentioned above have a common characteristic. The amount and direction of errors at each instant can be considered, in practice, as being constant and the errors are the same for receivers receiving the same satellites.

Therefore, the on board receivers and that one located next to the point to the approached with precision will have the same errors. For this reason the above-mentioned errors can be eliminated by carrying out the difference between the coordinates of the mobile vehicle and those of the point to be approached. This operation generates a vector (difference vector) providing magnitude and direction of the distance between the mobile vehicle and the fixed point with great accuracy.

The non systematic errors such as the receiver noise and the reception of signals from multiple paths can be reduced with this system through calculations averaged in time.

The GPS system has a worldwide coverage, while the coverage of the relative GPS depends mainly on two factors. One is the coverage provided by the NDB beacon, that depends mainly on the transmitted power and is able to cover anyway an area larger than 350 km. in radius. The other factor is due to the fact that the two receivers have to receive the same satellites. A low power NDB station has anyway a coverage exceeding this air space. The area in which the two receivers receive at least four satellites can be larger than 180 km. in radius. The area required for a precision approach is lower than 35 km. in radius. Therefore the coverage provided by the relative GPS is much larger than the one normally used during approach steps.

Comparisons with differential GPS, which has a comparable predictability, have shown that through an every six seconds updating of the estimates the relative GPS is capable of standing at a large extent the most severe IFR (Instrument Flight Rule) category 1 conditions. From calculations carried out it results that the relative GPS can reach a vertical accuracy of 1.7 m. and a lateral accuracy of 0.7 m.

### PART LIST

- 1: - MOBILE VEHICLE
- 2: - PROVISIONAL POINT
- 3: - FIRST GPS RECEIVER
- 4: - SECOND GPS RECEIVER
- 5: - PROCESSOR
- 6, 6': - RADIO LINK

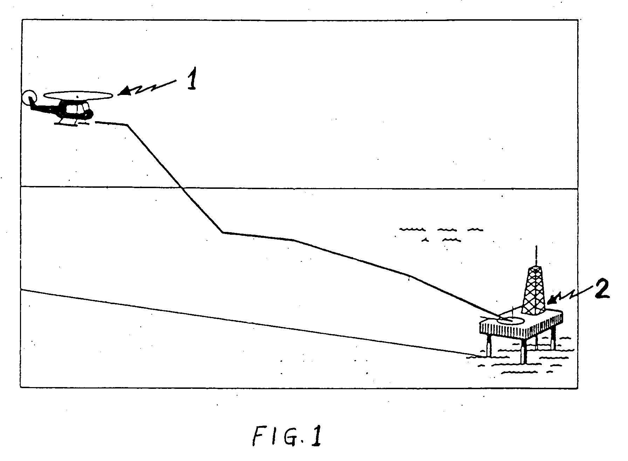

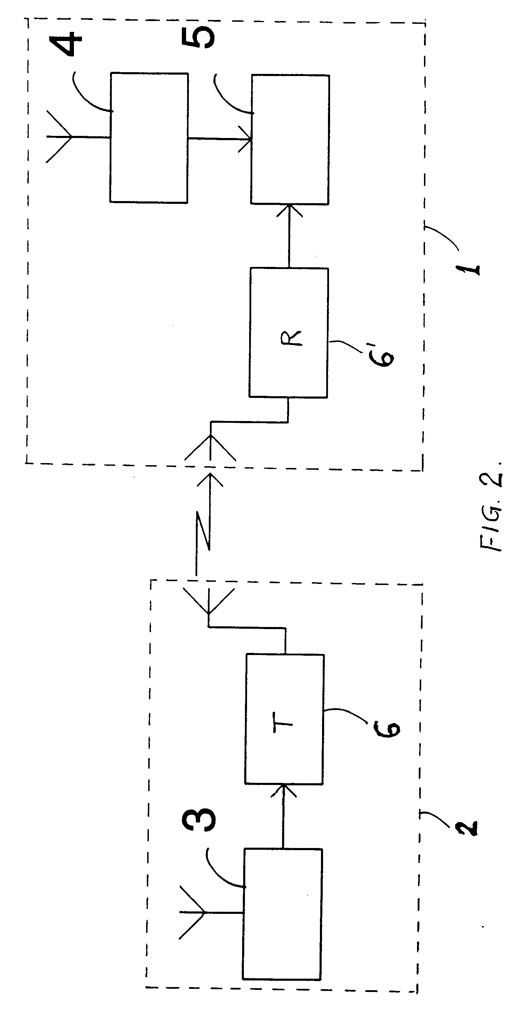

## Claims

1. System for the precision approach of mobile vehicles to provisional points equipped for such a purpose, of the type comprising a first GPS receiver located in the vicinity of said equipped points, a second GPS receiver installed in said mobile vehicles, a radio link between said first and second receivers, a processor designed to carry out computations, characterized in that said processor, on the ground of information received from said first and second receivers, calculates the relative position between said mobile vehicles and said equipped points in such a way as to eliminate the systematic errors introduced in the GPS system.

2. System according to claim 1, characterized in that said processor is located in said mobile vehicles.

3. System according to claim 1, characterized in that said radio link between said first and second receivers is used for transmitting latitude, longitude and altitude data.

4. System according to claim 1, characterized in that said processor calculates the relative position between said mobile vehicles and said equipped points by calculating the relative vector carrying out the difference between the latitudes, the longitudes and the altitudes of said first and second receivers respectively.

5. System according to claim 1, characterized in that said relative position between said mobile vehicles and said equipped points is visualized through ILS-type indicators.

6. System according to claim 1, characterized in that said radio link is established through the use of NDB beacons.

7. System according to claim 1, characterized in that said processor further calculates velocity and time to said equipped points.

8. System according to claim 1, characterized in that said processor carries out said calculation continuously and updates its reading out.

9. Method for the precision approach of mobile vehicles to provisional points equipped for such a purpose comprising the steps of receiving information from a first GPS receiver and receiving information from a second GPS receiver, characterized in that the relative position between said first receiver and said second receiver is calculated so as to eliminate the systematic errors introduced in the GPS system.
